# EUROPEAN PATENT APPLICATION

(11) **EP 4 836 251 A1**
(43) Date of publication of application: **04.11.2026**
(21) Application number: 24910007.4
(22) Date of filing: 11.09.2024
(51) Int. Cl.: H02K 3/50, H02K 3/28, H02K 3/38, H02K 5/22

(54) **STATOR, ELECTRIC MOTOR, SHOCK ABSORBER, SUSPENSION SYSTEM AND VEHICLE**

(30) Priority: 29.12.2023 CN 202311873096
(71) Applicant: BYD Company Limited, Shenzhen, Guangdong 518118 (CN)
(72) Inventor: ZHANG, Feng, Shenzhen, Guangdong 518118 (CN); LIAO, Yinsheng, Shenzhen, Guangdong 518118 (CN); SUN, Xianmeng, Shenzhen, Guangdong 518118 (CN); LUO, Jing, Shenzhen, Guangdong 518118 (CN); LIN, Jinhong, Shenzhen, Guangdong 518118 (CN)
(74) Representative: Taor, Simon Edward William
(86) International application number: PCT/CN2024/118122
(87) International publication number: WO 2025/139061

(57) **Abstract**

A stator, a motor, a shock absorber, a suspension system, and a vehicle are provided. The stator includes a first phase wire, a second phase wire, a third phase wire, an iron core body, and a coil wound around the iron core body. The coil includes a plurality of outer wire ends. The plurality of outer wire ends are spaced apart in an axial direction of the iron core body. The outer wire ends are disposed on an outer circumferential side of the iron core body. The adjacent and in-phase outer wire ends are connected to each other.

## Description

This application claims priority to Chinese Patent Application No. 202311873096.8, filed with the China National Intellectual Property Administration on December 29, 2023 and entitled "STATOR, MOTOR, SHOCK ABSORBER, SUSPENSION SYSTEM, AND VEHICLE", which is incorporated herein by reference in its entirety.

### TECHNICAL FIELD

This application relates to the field of motor technologies, and specifically, to a stator, a motor, a shock absorber, a suspension system, and a vehicle.

### BACKGROUND

Three phase wires of a motor are connected to each other through coils. In a related technology, the three phase wires have complex wire connection structures and are inconvenient to operate. In addition, the coil is prone to damage during wire connection, and a product yield is low.

### SUMMARY

An objective of this application is to provide a stator, a motor, a shock absorber, a suspension system, and a vehicle, aiming at solving a problem that an existing winding method for a motor causes great damage to a coil.

To implement the objective of this application, according to a first aspect, this application provides a stator. The stator includes a first phase wire, a second phase wire, a third phase wire, an iron core body, and a coil wound around the iron core body, where the coil includes a plurality of outer wire ends, the plurality of outer wire ends are spaced apart in an axial direction of the iron core body, the outer wire ends are disposed on an outer circumferential side of the iron core body, and the adjacent and in-phase outer wire ends are connected to each other.

In a possible implementation, the stator includes a first connector, and two ends of the first connector are respectively connected to the adjacent and in-phase outer wire ends.

In a possible implementation, the first connector includes a first wire and a first insulating sleeve, and the first insulating sleeve is sleeved on the first wire; and
two ends of the first insulating sleeve are respectively provided with a first clamping portion and a second clamping portion, and the first wire extends into the first clamping portion and the second clamping portion, to connect to the outer wire ends.

In a possible implementation, the iron core body includes a plurality of first iron core units, and the plurality of first iron core units are spaced apart in the axial direction of the iron core body.

In a possible implementation, the first iron core unit includes a first end face and a second end face that are disposed opposite to each other, the first end face is provided with a first winding portion, and the second end face is provided with a second winding portion; and
the coil includes a first coil and a second coil, the first coil is disposed at the first winding portion, and the second coil is disposed at the second winding portion.

In a possible implementation, the outer wire end includes a first upper outer wire end and a first lower outer wire end, at least part of the first coil is provided with the first upper outer wire end, and at least part of the second coil is provided with the first lower outer wire end; and
between the adjacent and in-phase first iron core units, the first upper outer wire end and the first lower outer wire end are connected through a first connector.

In a possible implementation, the first coil is provided with a first upper inner wire end, the second coil is provided with a first lower inner wire end, the first upper inner wire end and the first lower inner wire end are disposed close to an inner circumferential side of the first iron core unit; and
in each first iron core unit, the first upper inner wire end and the first lower inner wire end are connected through a second connector.

In a possible implementation, the second connector includes a second wire and a second insulating sleeve, and the second insulating sleeve is sleeved on the second wire; and
two ends of the second insulating sleeve are respectively provided with a third clamping portion and a fourth clamping portion, one end of the second wire extends into the third clamping portion to connect to the first upper inner wire end, and the other end of the second wire extends into the fourth clamping portion to connect to the first lower inner wire end.

In a possible implementation, the outer wire end includes a plurality of first upper outer wire ends, and the first upper outer wire ends are disposed at the first coil; and
at least one of the first upper outer wire ends is connected to the first phase wire through a third connector;
at least one of the first upper outer wire ends is connected to the second phase wire through a fourth connector; and
at least one of the first upper outer wire ends is connected to the third phase wire.

In a possible implementation, the third connector includes a third wire and a third insulating sleeve, and the third insulating sleeve is sleeved on the third wire; and
the third insulating sleeve includes a fifth clamping portion, one end of the third wire is connected to the first phase wire, and one end of the same extends into the fifth clamping portion to connect to the first upper outer wire end.

In a possible implementation, the fourth connector includes a fourth wire and a fourth insulating sleeve, and the fourth insulating sleeve is sleeved on the fourth wire; and
the fourth insulating sleeve includes a sixth clamping portion, one end of the fourth wire is connected to the second phase wire, and one end of the same extends into the sixth clamping portion to connect to the first upper outer wire end.

In a possible implementation, the iron core body includes a second iron core unit, and the second iron core unit is disposed on the first iron core unit.

In a possible implementation, the second iron core unit includes a third end face and a fourth end face that are disposed opposite to each other, the fourth end face is disposed facing the first iron core unit, and the fourth end face is provided with a third winding portion; and
the coil includes a third coil, and the third coil is disposed at the third winding portion.

In a possible implementation, the third coil is provided with a second lower outer wire end, the second lower outer wire end is disposed close to an outer circumferential side of the second iron core unit, and the second lower outer wire end is connected to the adjacent and in-phase outer wire end through a first connector.

In a possible implementation, the third coil is provided with a second lower inner wire end, the second lower inner wire end is disposed close to an inner circumferential side of the second iron core unit, and the second lower inner wire end is connected to the third phase wire through a fifth connector.

In a possible implementation, the fifth connector includes a fifth wire and a fifth insulating sleeve, and the fifth insulating sleeve is sleeved on the fifth wire; and
the fifth insulating sleeve includes a seventh clamping portion, one end of the fifth wire is connected to the third phase wire, and one end of the same extends into the seventh clamping portion to connect to the second lower inner wire end.

In a possible implementation, the iron core body includes a third iron core unit, and the third iron core unit is disposed below the first iron core unit.

In a possible implementation, the third iron core unit includes a fifth end face and a sixth end face that are disposed opposite to each other, the fifth end face is disposed at the third iron core unit and faces the first iron core unit, and the fifth end face is provided with a fourth winding portion; and
the coil includes a fourth coil, and the fourth coil is disposed at the fourth winding portion.

In a possible implementation, the fourth coil is provided with a second upper outer wire end, and the second upper outer wire end is connected to the adjacent and in-phase outer wire end through a first connector.

In a possible implementation, the stator further includes a conductive member, and the conductive member is separately electrically connected to the first phase wire, the second phase wire, and the third phase wire.

In a possible implementation, the conductive member is disposed below the iron core body.

In a possible implementation, the conductive member is connected to the coil in a radial direction of the iron core body.

In a possible implementation, the conductive member includes a first connecting portion, a second connecting portion, and a third connecting portion that are connected to each other; and
the first connecting portion is disposed close to an inner circumferential side of the iron core body, and the second connecting portion and the third connecting portion are disposed close to an outer circumferential side of the iron core body.

In a possible implementation, the iron core body includes a third iron core unit, the coil includes a third coil, the third coil is disposed at the third iron core unit, the third coil includes a second lower outer wire end and a second lower inner wire end, the second lower outer wire end is disposed close to an outer circumferential side of the third iron core unit, and the second lower inner wire end is disposed close to an inner circumferential side of the third iron core unit; and
the second lower outer wire end is connected to the third phase wire, and the second lower inner wire end is connected to the first connecting portion;
the first phase wire is connected to the second connecting portion; and
the second phase wire is connected to the third connecting portion.

In a possible implementation, the third iron core unit includes a fifth end face and a sixth end face that are disposed opposite to each other; and
the fourth coil is disposed on the fifth end face, and the conductive member is disposed on the sixth end face.

In a possible implementation, the stator further includes a center rod, and the iron core body is sleeved on the center rod.

In a possible implementation, the center rod is hollow, and a rod wall of the center rod is provided with a first through hole; and
one end of each of the first phase wire, the second phase wire, and the third phase wire is connected to the coil, and the other end passes through the first through hole and extends into the center rod.

In a possible implementation, one end of the center rod is provided with an opening; and
the stator further includes a sealing cover, the sealing cover covers the opening, the sealing cover is provided with a second through hole, and the first phase wire, the second phase wire, and the third phase wire pass out of the center rod through the second through hole.

In a possible implementation, the stator further includes a bearing, and the bearing is configured to connect the center rod to a rotor of a motor.

According to a second aspect, this application further provides a motor, including:
the foregoing stator; and
a rotor, the rotor being movable relative to an axial direction of the stator.

According to a third aspect, this application further provides a shock absorber. The shock absorber includes the foregoing motor.

According to a fourth aspect, this application further provides a suspension system. The suspension system includes the foregoing shock absorber.

According to a fifth aspect, this application further provides a vehicle. The vehicle includes the foregoing motor and the foregoing suspension system.

According to the technical solutions of this application, the plurality of outer wire ends are disposed outside the iron core body, so that wire connections of the first phase wire, the second phase wire, and the third phase wire with the coil are led to the outside of the iron core body. In this way, a stator structure is optimized, wire connection difficulty of the stator is reduced, damage to the coil is reduced, and a product yield is improved.

### DESCRIPTION OF DRAWINGS

To more clearly illustrate describe technical solutions in implementations of this application or a conventional technology, the drawings used in the description of the implementations or the conventional technology are briefly introduced below. Obviously, the drawings described below are only some implementations of this application. For a person of ordinary skill in the art, other drawings can be obtained from these drawings without creative efforts.
FIG. 1 is a diagram of a three-dimensional structure of an embodiment of a motor according to this application;
FIG. 2 is a cross-sectional view of FIG. 1;
FIG. 3 is a diagram of a three-dimensional structure of FIG. 1 after a housing is removed;
FIG. 4 is a diagram of a three-dimensional structure of a first iron core unit and a first coil in FIG. 2;
FIG. 5 is a cross-sectional view of FIG. 2;
FIG. 6 is a diagram of a three-dimensional structure of a first iron core unit in FIG. 4;
FIG. 7 is a wire connection diagram of a first phase wire;
FIG. 8 is a wire connection diagram of a second phase wire;
FIG. 9 is a wire connection diagram of a third phase wire;
FIG. 10 is a diagram of a three-dimensional structure of a first connector;
FIG. 11 is a diagram of a three-dimensional structure of a second connector;
FIG. 12 is a diagram of a three-dimensional structure of a third connector or a fourth connector;
FIG. 13 is a top view of a second iron core unit and a second coil;
FIG. 14 is a diagram of a three-dimensional structure of a second iron core unit;
FIG. 15 is a diagram of a three-dimensional structure of a fifth connector;
FIG. 16 is a diagram of a three-dimensional structure of a third iron core unit and a third coil;
FIG. 17 is a top view of a third iron core unit and a third coil;
FIG. 18 is a diagram of a three-dimensional structure of a third iron core unit;
FIG. 19 is an exploded view of a conductive member and a sixth insulating sleeve;
FIG. 20 is an exploded view of a center rod, a sealing cover and a bearing; and
FIG. 21 is a diagram of a structure of a vehicle.

### Reference numerals:

4000 vehicle;
3000 suspension system;
2000 shock absorber;
1000 motor;
200 rotor, 210 housing, 211 mounting cavity, 212 mounting portion, 220 permanent magnet;
100 stator;
1 iron core body, 11 first iron core unit, 111 first winding portion, 112 second winding portion, 113 first wire hole, 114 first annular baffle, 115 second annular baffle, 116 first winding groove, 117 second winding groove, 118 first positioning groove, 119 second positioning groove, 120 first end face, 128 second end face, 12 second iron core unit, 121 third winding portion, 122 second wire hole, 123 third annular baffle, 124 third winding groove, 125 third positioning groove, 126 third end face, 127 fourth end face, 13 third iron core unit, 131 fourth winding portion, 132 third wire hole, 133 fourth annular baffle, 134 fourth winding groove, 135 fourth positioning groove, 136 fifth end face, 137 sixth end face;
2 coil, 21 outer wire end, 22, 22a-22k first coil, 221, 221a-221k first upper outer wire end, 222, 222a-222k first upper inner wire end, 23, 23a-23k second coil, 231, 231a-231k first lower outer wire end, 232, 232a-232k first lower inner wire end, 24 third coil, 241 second lower outer wire end, 242 second lower inner wire end, 25 fourth coil, 251 second upper outer wire end, 252 second upper inner wire end;
3 first phase wire;
4 second phase wire;
5 third phase wire;
6, 6a-6l first connector, 61 first wire, 62 first insulating sleeve, 621 first clamping portion, 622 second clamping portion, 623 first limiting portion;
7, 7a-7k second connector, 71 second wire, 72 second insulating sleeve, 721 third clamping portion, 722 fourth clamping portion, 723 second limiting portion;
8 third connector, 81 third wire, 82 third insulating sleeve, 821 fifth clamping portion, 822 third limiting portion;
9 fourth connector, 91 fourth wire, 92 fourth insulating sleeve, 921 sixth clamping portion, 922 fourth limiting portion;
10 fifth connector, 101 fifth wire, 102 fifth insulating sleeve, 1021 seventh clamping portion, 1022 fifth limiting portion;
20 conductive member, 201 first connecting portion, 202 second connecting portion, 203 third connecting portion.
30 sixth insulating sleeve;
40 center rod, 401 first through hole, 402 opening;
50 sealing cover, 501 second through hole;
60 bearing.

### DETAILED DESCRIPTION OF EMBODIMENTS

The following clearly and completely describes the technical solutions in implementations of this application with reference to the accompanying drawings in implementations of this application. It is clear that the described implementations are merely some but not all of implementations of this application. All other implementations obtained by a person of ordinary skill in the art based on the implementations of this application without creative efforts shall fall within the protection scope of this application.

It should be noted that when an assembly is referred to as "fixed" to another assembly, the assembly may be directly on the other assembly or there may be an assembly therebetween. When an assembly is considered to be "connected" to another assembly, the assembly may be directly connected to the other assembly or there may be an intermediate assembly at the same time.

Unless otherwise defined, all technical and scientific terms used in this application have the same meanings as commonly understood by a person of ordinary skill in the art to which this application belongs. Terms used in the specification of this application are only for the objective of describing specific embodiments and are not intended to limit this application. The term "and/or" as used in this application includes any and all combinations of one or more related listed items.

The following describes in detail some implementations of this application with reference to accompanying drawings. In the absence of conflict, the following embodiments and features within the embodiments may be combined with each other.

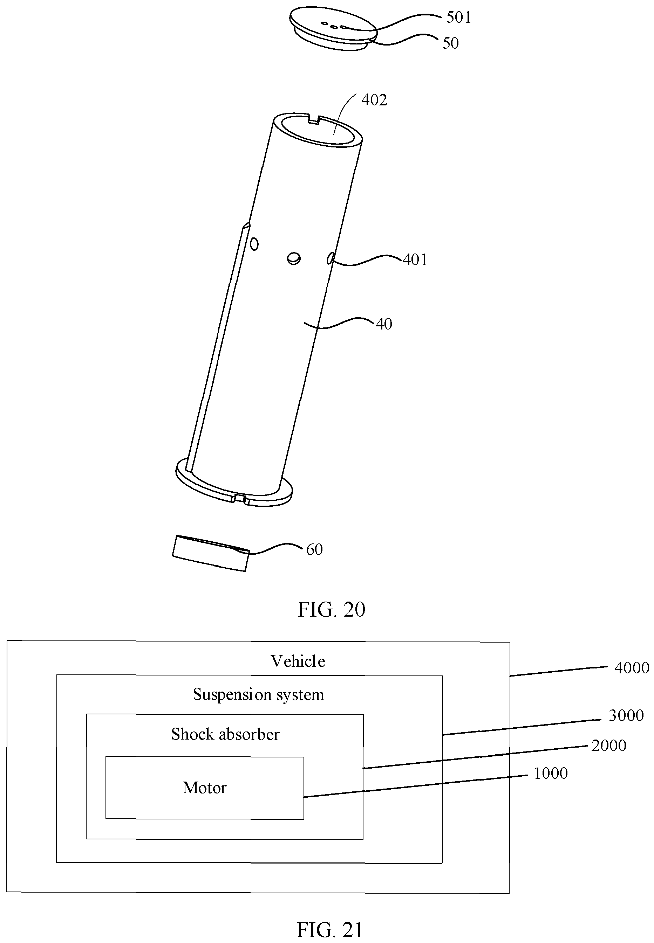

As shown in FIG. 21, this application provides a vehicle 4000. The vehicle includes a vehicle body, wheels, and a suspension system 3000. The vehicle body serves as a framework of the vehicle and is configured to support and connect other assemblies of the vehicle. The wheels are rotatably connected to the vehicle body, and the vehicle can rotate under the action of a vehicle powertrain and then drive the vehicle to move. The suspension system 3000 is disposed between the vehicle body and the wheels. The suspension system 3000 is configured to transmit a moment acting between the vehicle body and the wheels, alleviate an impact load exerted on the vehicle body by an uneven road surface, and attenuate vibration of a bearing system caused by the impact load, so as to ensure normal operation of the vehicle. The suspension system 3000 includes a frame body, a shock absorber 2000, and a spring. The frame body serves as a framework of the suspension system 3000, configured to support and connect various components of the suspension system 3000. The frame body is fixed to the vehicle body. The spring is disposed between the frame body and the wheels to provide cushioning between the body and the wheels. The shock absorber 2000 is configured to attenuate vibration of the spring to maintain stability of the vehicle body.

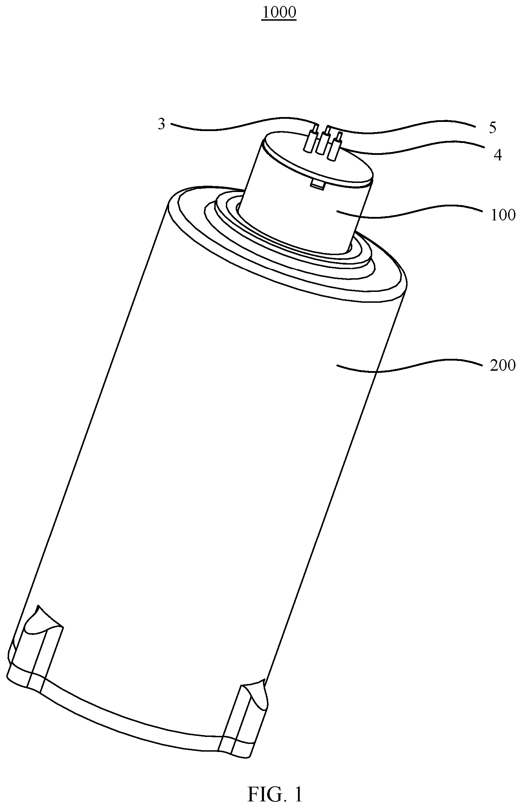

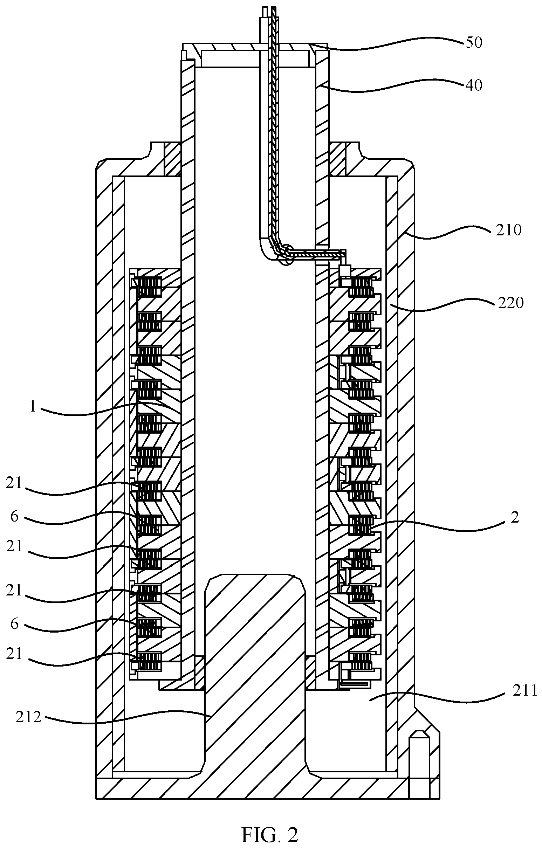

Refer to FIG. 1 and FIG. 2. The shock absorber 2000 includes a motor 1000. The motor 1000 includes a stator 100 and a rotor 200. The stator 100 and the rotor 200 are connected to each other. The stator 100 is configured to generate a first magnetic field, to push the rotor 200 to move relative to an axis direction of the rotor 200. The stator 100 includes a first phase wire 3, a second phase wire 4, a third phase wire 5, an iron core body 1, and a coil 2. One end of each of the first phase wire 3, the second phase wire 4, and the third phase wire 5 is connected to a power supply, and the other end is respectively connected to other phase wires through the coil 2. The first phase wire 3, the second phase wire 4, and the third phase wire 5 are configured to guide a current of the power supply into the coil 2. The iron core body 1 is configured to provide support for the coil 2. The coil 2 is wound around the iron core body 1. The coil 2 is configured to receive currents of the first phase wire 3, the second phase wire 4, and the third phase wire 5, and generate a first magnetic field, thereby pushing the rotor 200 to move.

In a related technology, a coil 2 is wound around an iron core body 1. The coil 2 includes an outer wire end 21 close to an outer circumferential side of the iron core body 1 and an inner wire end close to an inner circumferential side of the iron core body 1. When the coil 2 is connected to a first phase wire 3, a second phase wire 4, and a third phase wire 5, the outer wire end 21 located on the outer circumferential side needs to be led into the inner circumferential side of the iron core body 1 for wire connection, which is complex in wire connection mode and low in wire connection efficiency. In addition, when the outer wire end 21 is connected to the inner circumferential side, it is prone to damage, thereby affecting a product yield.

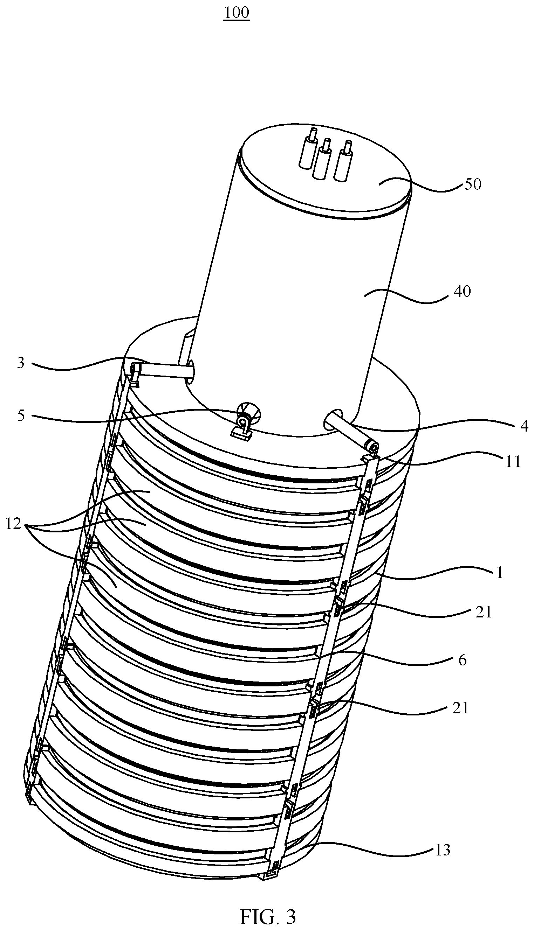

To resolve the foregoing problem, refer to FIG. 2 and FIG. 3. In the technology of this application, the coil 2 includes a plurality of outer wire ends 21. The plurality of outer wire ends 21 are spaced apart in an axial direction of the iron core body 1. The outer wire ends 21 are disposed on an outer circumferential side of the iron core body 1. The adjacent and in-phase outer wire ends 21 are connected to each other. It should be noted that in this application, the outer wire ends 21 connected to the same phase wire are referred to as in-phase outer wire ends 21. In the technical solution of this application, the plurality of outer wire ends 21 are disposed outside the iron core body 1, so that wire connections of the first phase wire 3, the second phase wire 4, and the third phase wire 5 with the coil 2 are led to the outside of the iron core body 1. In this way, a structure of the stator 100 is optimized, wire connection difficulty of the stator 100 is reduced, damage to the coil 2 is reduced, and a product yield is improved.

The stator 100 includes a first connector 6. Two ends of the first connector 6 are respectively connected to the adjacent and in-phase outer wire ends 21. In this application, the first connector 6 is disposed the between adjacent and in-phase outer wire ends 21, to simplify a wire connection process of the outer wire ends 21, and improve wire connection efficiency of the outer wire ends 21.

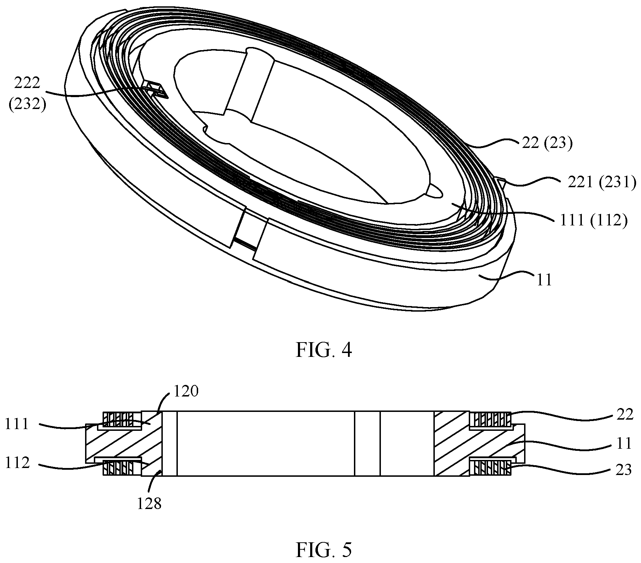

Refer to FIG. 3 to FIG. 6. The iron core body 1 includes a plurality of first iron core units 11. The plurality of first iron core units 11 are spaced apart in an axial direction of the iron core body 1. The coil 2 is wound around the first iron core unit 11. The first iron core unit 11 is configured to increase a quantity of turns of the coil 2, thereby increasing strength of a first magnetic field generated by the coil 2, and increasing output power of the motor 1000.

In a possible implementation of this application, the first iron core unit 11 includes a first end face 120 and a second end face 128 that are disposed opposite to each other. The first end face 120 is provided with a first winding portion 111, and the second end face 128 is provided with a second winding portion 112. The coil 2 includes a first coil 22 and a second coil 23. The first coil 22 is disposed at the first winding portion 111, and the second coil 23 is disposed at the second winding portion 112. With arrangement of the first winding portion 111 and the second winding portion 112, on the one hand, support can be provided for winding of the first coil 22 and the second coil 23, preventing the first coil 22 and the second coil 23 from loosening or deforming due to vibration of the motor 1000 or an external force. On the other hand, the first winding portion 111 and the second winding portion 112 can efficiently concentrate and transmit first magnetic fields generated by the first coil 22 and the second coil 23, thereby increasing output power of the motor 1000.

In the same first iron core unit 11, the first coil 22 and the second coil 23 are connected to each other. In the adjacent and in-phase first iron core units 11, the first coil 22 and the second coil 23 that are disposed opposite to each other are connected, and the second coil 23 is connected to the first coil 22. Specifically, the outer wire end 21 includes a first upper outer wire end 221 and a first lower outer wire end 231. At least part of the first coil 22 is provided with the first upper outer wire end 221, and at least part of the second coil 23 is provided with the first lower outer wire end 231. In the adjacent and in-phase first iron core units 11, the first upper outer wire end 221 is connected to the first lower outer wire end 231 through the first connector 6. At least one of the first upper outer wire ends 221 is connected to the first phase wire 3. At least one of the first upper outer wire ends 221 is connected to the second phase wire 4. At least one of the first upper outer wire ends 221 is connected to the third phase wire 5. The first coil 22 is provided with a first upper inner wire end 222. The second coil 23 is provided with a first lower inner wire end 232. The first upper inner wire end 222 and the first lower inner wire end 232 are disposed close to an inner circumferential side of the first iron core unit 11. In each first iron core unit 11, the first upper inner wire end 222 is connected to the first lower inner wire end 232.

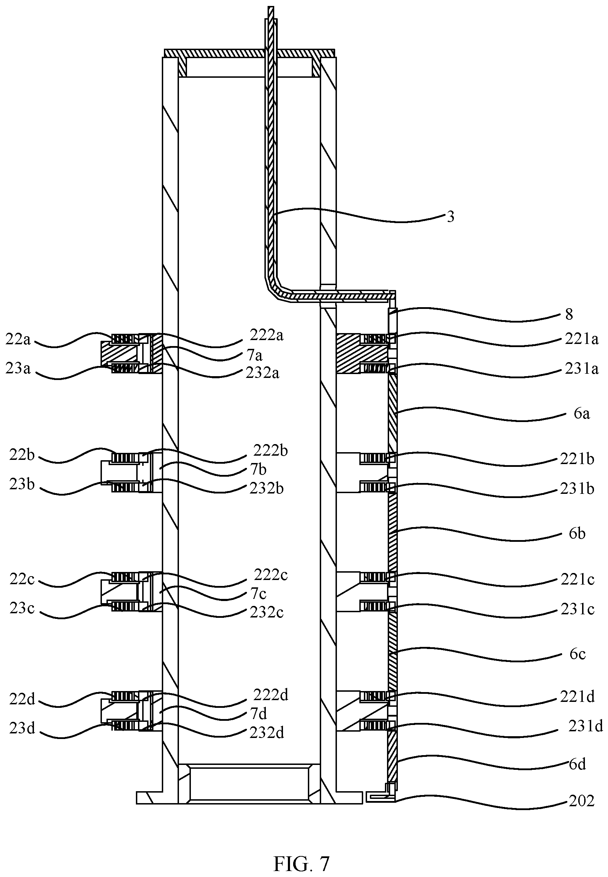

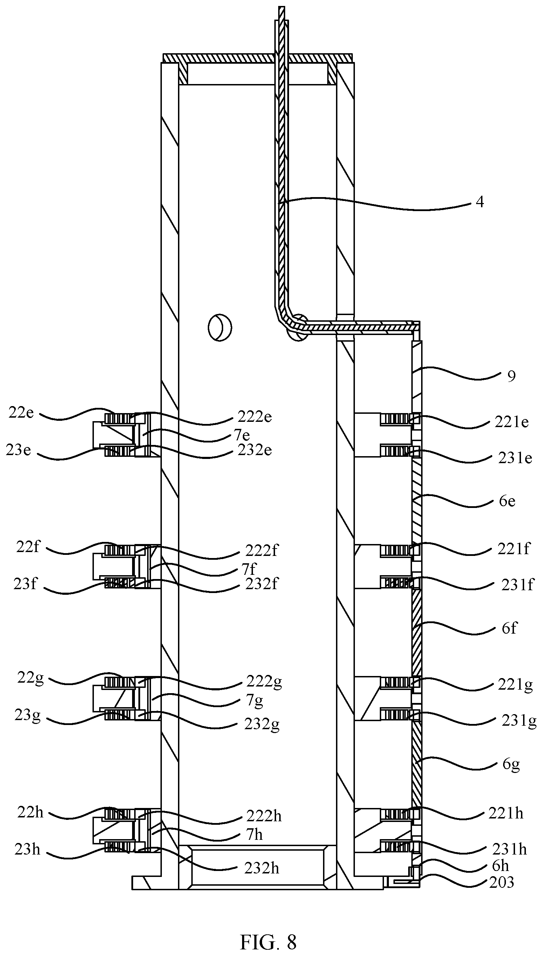

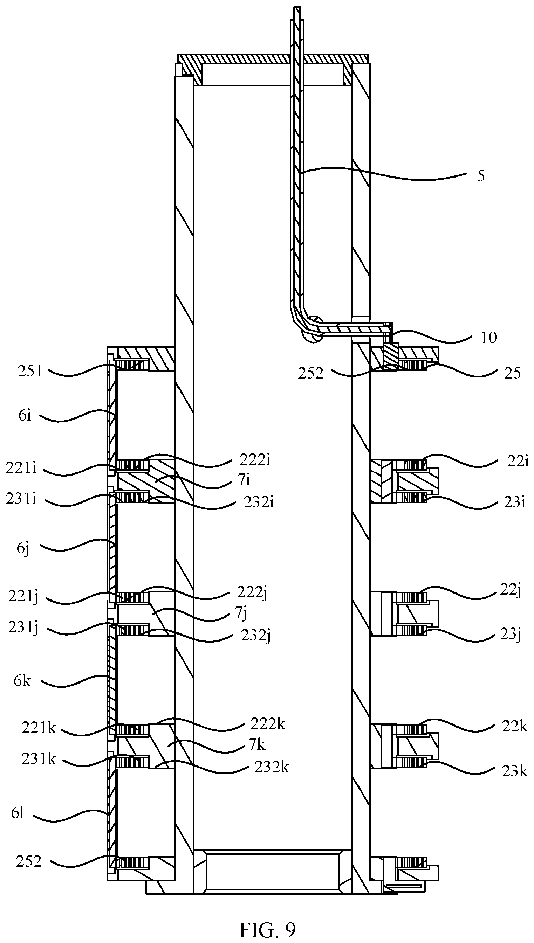

Refer to FIG. 7. In the first phase wire 3, a current from the first phase wire 3 flows through a first upper outer wire end 221a and a first upper inner wire end 222a of a first coil 22a, a first lower inner wire end 232a and a first lower outer wire end 231a of a second coil 23a, a first upper outer wire end 221b and a first upper inner wire end 222b of a first coil 22b, a first lower inner wire end 232b and a first lower outer wire end 231b of a second coil 23b, a first upper outer wire end 221c and a first upper inner wire end 222c of a first coil 22c, a first lower inner wire end 232c and a first lower outer wire end 231c of a second coil 23c, a first upper outer wire end 221d and a first upper inner wire end 222d of a first coil 22d, and a first lower inner wire end 232d and a first lower outer wire end 231d of a second coil 23d, and is connected to other phase wires through the first lower outer wire end 231d. Refer to FIG. 8. In the second phase wire 4, a current from the second phase wire 4 flows through a first upper outer wire end 221e and a first upper inner wire end 222e of a first coil 22e, a first lower inner wire end 232e and a first lower outer wire end 231e of a second coil 23e, a first upper outer wire end 221f and a first upper inner wire end 222f of a first coil 22f, a first lower inner wire end 232f and a first lower outer wire end 231f of a second coil 23f, a first upper outer wire end 221g and a first upper inner wire end 222g of a first coil 22g, a first lower inner wire end 232g and a first lower outer wire end 231g of a second coil 23g, a first upper outer wire end 221h and a first upper inner wire end 222h of a first coil 22h, and a first lower inner wire end 232h and a first lower outer wire end 231h of a second coil 23h, and is connected to other phase wires through the first lower outer wire end 231h. Refer to FIG. 9. In the third phase wire 5, a current from the third phase wire 5 flows through a first upper outer wire end 221i and a first upper inner wire end 222i of a first coil 22i, a first lower inner wire end 232i and a first lower outer wire end 231i of a second coil 23i, a first upper outer wire end 221j and a first upper inner wire end 222j of a first coil 22j, a first lower inner wire end 232j and a first lower outer wire end 231j of a second coil 23j, a first upper outer wire end 221k and a first upper inner wire end 222k of a first coil 22k, a first lower inner wire end 232k of a second coil 23k, and is connected to other phase wires through a first lower outer wire end 231k. In this implementation, the first upper outer wire end 221 and the first upper inner wire end 222 are disposed at the first coil 22, and the first lower outer wire end 231 and the first lower inner wire end 232 are disposed at the second coil 23. External wire connections of the first coil 22 and the second coil 23 are implemented through the first upper outer wire end 221 and the first lower outer wire end 231. Internal wire connections of the first coil 22 and the second coil 23 are implemented through the first upper inner wire end 222 and the first lower inner wire end 232. This arrangement avoids crossed wire connections of inner and outer wire ends of the coil 2, optimizes a wire connection structure of the stator 100, reduces wire connection difficulty of the stator 100, improves wire connection efficiency of the stator 100, reduces damage to coil 2, and improves a product yield.

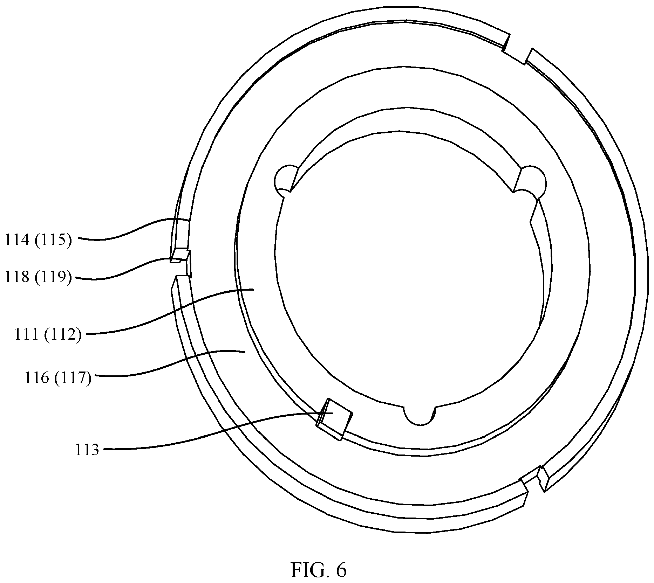

Refer to FIG. 6. In a possible implementation of this application, the first end face 120 of the first iron core unit 11 is provided with a first annular baffle 114. The first annular baffle 114 and the first winding portion 111 together define a first winding groove 116. The first coil 22 is disposed in the first winding groove 116. The first annular baffle 114 and the first winding portion 111 cooperate with each other to fix the first coil 22 in the first winding groove, thereby improving fixing stability of the first coil 22.

In a possible implementation of this application, the first annular baffle 114 is provided with a first positioning groove 118, and the first connector 6 is clamped into the first positioning groove 118. With arrangement of the first positioning groove 118, on the one hand, positioning can be provided for connections of the first connector 6 with the first upper outer wire end 221 and the first lower outer wire end 231, thereby improving connection efficiency of the first connector 6 with the first upper outer wire end 221 and the first lower outer wire end 231. On the other hand, the first positioning groove 118 can prevent the first connector 6 from protruding out of the iron core body 1, thereby reducing the possibility that the first connector 6 collides with other parts, and prolonging a service life of the stator 100.

In a possible implementation of this application, the first end face 120 of the first iron core unit 11 is provided with a second annular baffle 115. The second annular baffle 115 and the second winding portion 112 together define a second winding groove 117. The second coil 23 is disposed in the second winding groove 117. The second annular baffle 115 and the second winding portion 112 cooperates with each other to fix the second coil 23 in the second winding groove, thereby improving fixing stability of the second coil 23.

In a possible implementation of this application, the second annular baffle 115 is provided with a second positioning groove 119, and the first connector 6 is clamped into the second positioning groove 119. With arrangement of the second positioning groove 119, on the one hand, positioning can be provided for connections of the first connector 6 with the first upper outer wire end 221 and the first lower outer wire end 231, thereby improving connection efficiency of the first connector 6 with the first upper outer wire end 221 and the first lower outer wire end 231. On the other hand, the second positioning groove 119 can prevent the first connector 6 from protruding out of the iron core body 1, thereby reducing the possibility that the first connector 6 collides with other parts, and prolonging a service life of the stator 100.

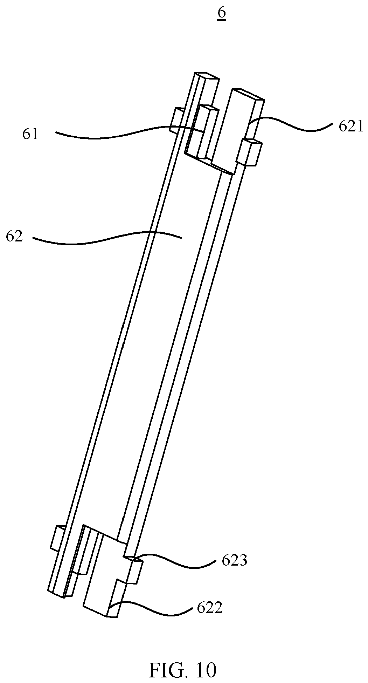

Refer to FIG. 10. In a possible implementation of this application, the first connector 6 includes a first wire 61 and a first insulating sleeve 62. The first insulating sleeve 62 is sleeved on the first wire 61. The first wire 61 is connected between the first upper outer wire end 221 and the first lower outer wire end 231, so that the first upper outer wire end 221 and first lower outer wire end 231 are electrically connected. The first insulating sleeve 62 is configured to prevent a short circuit caused by direct contact between the first wire 61 and the iron core body 1. The first insulating sleeve 62 has two functions. On the one hand, with arrangement of the first insulating sleeve 62, a wire connection apparatus can be directly assembled on the iron core body 1, thereby eliminating subsequent insulation processing and improving wire connection efficiency of the stator 100. On the other hand, two ends of the first insulating sleeve 62 are respectively provided with a first clamping portion 621 and a second clamping portion 622. The first wire 61 extends into the first clamping portion 621 and the second clamping portion 622, to connect to the first upper outer wire end 221 and the first lower outer wire end 231. In this way, connection stability of the first wire 61 with the first upper outer wire end 221 and the first lower outer wire end 231 is improved.

During assembling and wire connection of each first iron core unit 11, the first upper outer wire end 221 and the first lower outer wire end 231 that are connected protrude out of the iron core body 1, and extend into the first clamping portion 621 and the second clamping portion 622 in an axial direction of the iron core body 1, thereby implementing an electrical connection of each first iron core unit 11.

In a possible implementation of this application, the first insulating sleeve 62 is further provided with a first limiting portion 623. The first limiting portion 623 is configured to abut against the first positioning groove 118, to provide a limitation for fixations of the first connector 6 in the first positioning groove 118 and the second positioning groove 119, thereby improving mounting efficiency of the first connector 6 in the first positioning groove 118, and improving wire connection efficiency of the stator 100.

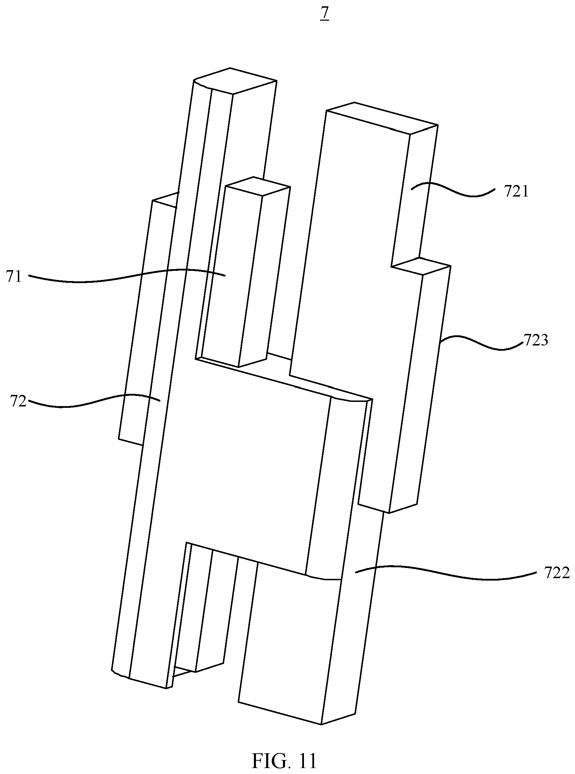

Refer to FIG. 6 and FIG. 11 together. In a possible implementation of this application, the first iron core unit 11 is provided with a first wire hole 113 that penetrates the first end face 120 and the second end face 128. The stator 100 includes a second connector 7. The second connector 7 passes through the first wire hole 113. The first upper inner wire end 222 is connected to the first lower inner wire end 232. In this application, the second connector 7 is disposed between the first upper inner wire end 222 and the first lower inner wire end 232, to simplify a wire connection process of the first upper inner wire end 222 and the first lower inner wire end 232, thereby improving wire connection efficiency of the stator 100. Specifically, the second connector 7 includes a second wire 71 and a second insulating sleeve 72. The second insulating sleeve 72 is sleeved on the second wire 71. The second wire 71 is connected between the first upper inner wire end 222 and the first lower inner wire end 232, so that the first upper inner wire end 222 and first lower inner wire end 232 are electrically connected. The second insulating sleeve 72 is configured to prevent a short circuit caused by direct contact between the second wire 71 and the iron core body 1. The second insulating sleeve 72 has two functions. On the one hand, with arrangement of the second insulating sleeve 72, a wire connection apparatus can be directly assembled on the iron core body 1, thereby eliminating subsequent insulation processing and improving assembly efficiency of the motor 1000. On the other hand, two ends of the second insulating sleeve 72 are respectively provided with a third clamping portion 721 and a fourth clamping portion 722. The second wire 71 extends into the third clamping portion 721 and the fourth clamping portion 722, to connect to the first upper inner wire end 222 and the first lower inner wire end 232. In this way, connection stability of the second wire 71 with the first upper inner wire end 222 and the first lower inner wire end 232 is improved.

When assembling the first iron core unit 11, the second connector 7 is first buried in the first wire hole 113. Then, the first coil 22 is wound around the first winding portion 111, and the second coil 23 is wound around the second winding portion 112. Finally, the first upper inner wire end 222 and the first lower inner wire end 232 are respectively inserted into the third clamping portion 721 and the fourth clamping portion 722 in a radial direction of the iron core body 1, thereby completing an internal wire connection of the first iron core unit. In a whole process, the first upper inner wire end 222 and the first lower inner wire end 232 only need to move in the radial direction of the iron core body 1. In this way, the impact of an insufficient axial space in the iron core body 1 on connections of the first upper inner wire end 222 and the first lower inner wire end 232 is reduced, wire connection difficulty of the first iron core unit 11 is reduced, wire connection efficiency is improved, and mass production of the stator 100 is facilitated.

In a possible implementation of this application, the second connector 7 further includes a second limiting portion 723. The second limiting portion 723 is configured to abut against the first wire hole 113, to position the second connector 7 in the first wire hole 113, thereby improving assembly efficiency of the second connector 7, and then improving wire connection efficiency of the stator 100.

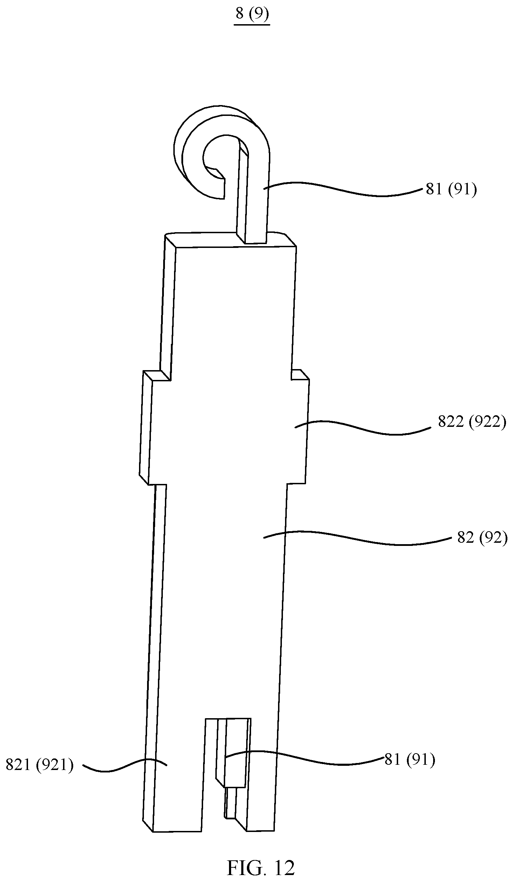

In a possible implementation of this application, the first upper outer wire end 221 is connected to the first phase wire 3 through a third connector 8. In this implementation, the third connector 8 is disposed on the first upper outer wire end 221 and the first phase wire 3, to simplify a step of connecting the first upper outer wire end 221 to the first phase wire 3, thereby improving connection efficiency between the first upper outer wire end 221 and the first phase wire 3, and improving wire connection efficiency of the stator 100. Refer to FIG. 12. In this implementation, the third connector 8 includes a third wire 81 and a third insulating sleeve 82. The third insulating sleeve 82 is sleeved on the third wire 81. The third wire 81 is connected between the first upper outer wire end 221 and the first phase wire 3, so that the first upper outer wire end 221 and the first phase wire 3 are electrically connected. The third insulating sleeve 82 is configured to prevent a short circuit caused by direct contact between the third wire 81 and the iron core body 1. The third insulating sleeve 82 has two functions. On the one hand, with arrangement of the third insulating sleeve 82, the third connector 8 can be directly assembled on the iron core body 1, thereby eliminating subsequent insulation processing and improving wire connection efficiency of the stator 100. On the other hand, one end of the third insulating sleeve 82 is provided with a fifth clamping portion 821, and the third wire 81 extends into the fifth clamping portion 821 to connect to the first upper outer wire end 221. In this way, connection stability between the third wire 81 and the first upper outer wire end 221 is improved.

In a possible implementation of this application, the third connector 8 includes a third limiting portion 822. The third limiting portion 822 is configured to abut against the first positioning groove 118, to position the third connector 8 in the first positioning groove 118. In this way, assembly efficiency of the third connector 8 is improved, thereby improving wire connection efficiency of the stator 100.

In a possible implementation of this application, the first upper outer wire end 221 is connected to the second phase wire 4 through a fourth connector 9. In this implementation, the fourth connector 9 is disposed on the first upper outer wire end 221 and the second phase wire 4, to simplify a step of connecting the first upper outer wire end 221 to the second phase wire 4, thereby improving connection efficiency between the first upper outer wire end 221 and the second phase wire 4, and improving wire connection efficiency of the stator 100. Specifically, refer to FIG. 12. The fourth connector 9 includes a fourth wire 91 and a fourth insulating sleeve 92. The fourth insulating sleeve 92 is sleeved on the fourth wire 91. The fourth wire 91 is connected between the first upper outer wire end 221 and the second phase wire 4, so that the first upper outer wire end 221 and the second phase wire 4 are electrically connected. The fourth insulating sleeve 92 is configured to prevent a short circuit caused by direct contact between the fourth wire 91 and the iron core body 1. The fourth insulating sleeve 92 has two functions. On the one hand, with arrangement of the fourth insulating sleeve 92, the fourth connector 9 can be directly assembled on the iron core body 1, thereby eliminating subsequent insulation processing and improving wire connection efficiency of the stator 100. On the other hand, one end of the fourth insulating sleeve 92 is provided with a sixth clamping portion 921, and the fourth wire 91 extends into the sixth clamping portion 921 to connect to the first upper outer wire end 221. In this way, connection stability between the fourth wire 91 and the first upper outer wire end 221 is improved.

In a possible implementation of this application, the fourth connector 9 includes a fourth limiting portion 922. The fourth limiting portion 922 is configured to abut against the first positioning groove 118, to position the fourth connector 9 in the first positioning groove 118. In this way, assembly efficiency of the fourth connector 9 is improved, thereby improving wire connection efficiency of the stator 100.

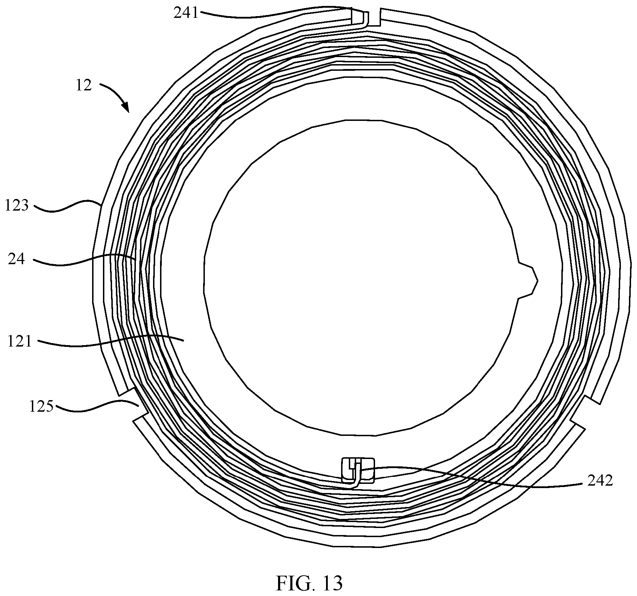

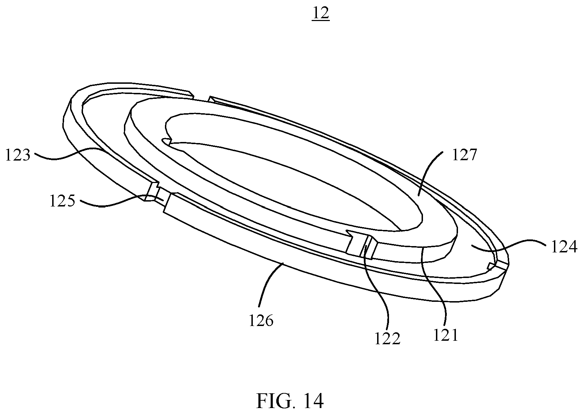

Refer to FIG. 13 and FIG. 14. The iron core body 1 includes a second iron core unit 12. The coil 2 includes a third coil 24. The second iron core unit 12 is disposed on the first iron core unit 11. The third coil 24 is wound around the second iron core unit 12. The third phase wire 5 is connected to the first upper outer wire end 221 through the third coil 24. Specifically, in a possible implementation of this application, the third coil 24 is provided with a second lower outer wire end 241. The second lower outer wire end 241 is disposed close to an outer circumferential side of the second iron core unit 12. The second lower outer wire end 241 is connected to the adjacent and in-phase outer wire end 21 through the first connector 6. The second iron core unit 12 and the third coil 24 are configured to change a wire connection position of the third phase wire 5 and the first upper outer wire end 221, preventing wire connection positions of the first phase wire 3, the second phase wire 4, and the third phase wire 5 from being too centralized, reserving space for wire connections of the first phase wire 3, the second phase wire 4, and the third phase wire 5, thereby improving wire connection efficiency of the stator 100.

In a possible implementation of this application, the second iron core unit 12 includes a third end face 126 and a fourth end face 127 that are disposed opposite to each other. The fourth end face 127 is disposed facing the first iron core unit 11. The fourth end face 127 is provided with a third winding portion 121. The third coil 24 is disposed at the third winding portion 121. With arrangement of the third winding portion 121, on the one hand, support can be provided for winding of the third coil 24, and preventing the third coil 24 from loosening or deforming due to vibration of the motor 1000 or an external force. On the other hand, the third winding portion 121 can efficiently concentrate and transmit a first magnetic field generated by the third coil 24, thereby increasing output power of the motor 1000.

In a possible implementation of this application, the fourth end face 127 of the second iron core unit 12 is provided with a third annular baffle 123. The third annular baffle 123 and the third winding portion 121 together define a third winding groove 124. The third coil 24 is disposed in the third winding groove 124. The third annular baffle 123 and the third winding portion 121 cooperate with each other to fix the third coil 24 in the third winding groove 124, thereby improving fixing stability of the third coil 24.

In a possible implementation of this application, the third annular baffle 123 is provided with a third positioning groove 125, and the first connector 6 is clamped into the third positioning groove 125. With arrangement of the third positioning groove 125, on one hand, positioning can be provided for a connection between the first connector 6 and the second lower outer wire end 241, thereby improving connection efficiency between the first connector 6 and the second lower outer wire end 241. On the other hand, the third positioning groove 125 can prevent the first connector 6 from protruding out of the iron core body 1, thereby reducing the possibility that the first connector 6 collides with other parts, and prolonging a service life of the stator 100.

In a possible implementation of this application, the second iron core unit 12 is provided with a second wire hole 122 that penetrates the third end face 126 and the fourth end face 127. The third coil 24 is provided with a second lower inner wire end 242. The second lower inner wire end 242 is disposed close to an inner circumferential side of the second iron core unit 12. The stator 100 further includes a fifth connector 10. The fifth connector 10 passes through the second wire hole 122. One end of the fifth connector 10 is connected to the second lower inner wire end 242, and the other end is connected to the third phase wire 5. In this application, the second lower inner wire end 242 and the third phase wire 5 are connected by a sixth connector, to simplify a wire connection process of the second lower inner wire end 242 and the third phase wire 5, thereby improving wire connection efficiency of the stator 100.

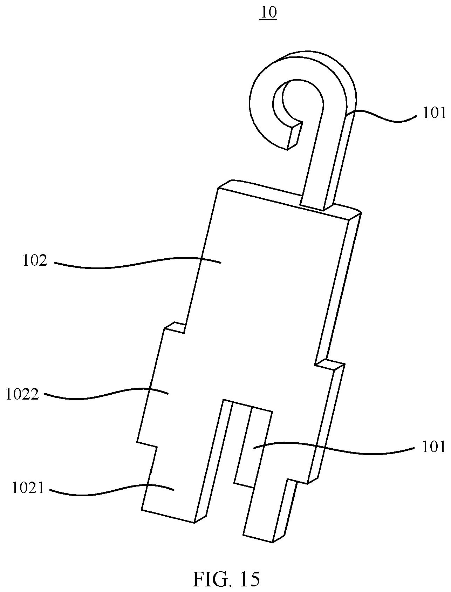

Refer to FIG. 15. In a possible implementation of this application, the fifth connector 10 includes a fifth wire 101 and a fifth insulating sleeve 102. The fifth insulating sleeve 102 is sleeved on the fifth wire 101. The fifth wire 101 is connected between the second lower inner wire end 242 and the third phase wire 5, so that the second lower inner wire end 242 and the third phase wire 5 are electrically connected. The fifth insulating sleeve 102 is configured to prevent a short circuit caused by direct contact between the fifth wire 101 and the iron core body 1. The fifth insulating sleeve 102 has two functions. On the one hand, with arrangement of the fifth insulating sleeve 102, the fifth connector 10 can be directly assembled on the iron core body 1, thereby eliminating subsequent insulation processing and improving wire connection efficiency of the stator 100. On the other hand, one end of the fifth insulating sleeve 102 is provided with a seventh clamping portion 1021, and the fifth wire 101 extends into the seventh clamping portion 1021 to connect to the second lower inner wire end 242. In this way, connection stability between the fifth wire 101 and the second lower inner wire end 242 is improved.

In a possible implementation of this application, the fifth connector 10 includes a fifth limiting portion 1022. The fifth limiting portion 1022 is configured to abut against the second wire hole 122, to position the fifth connector 10 in the second wire hole 122, thereby improving assembly efficiency of the fifth connector 10, and then improving wire connection efficiency of the stator 100.

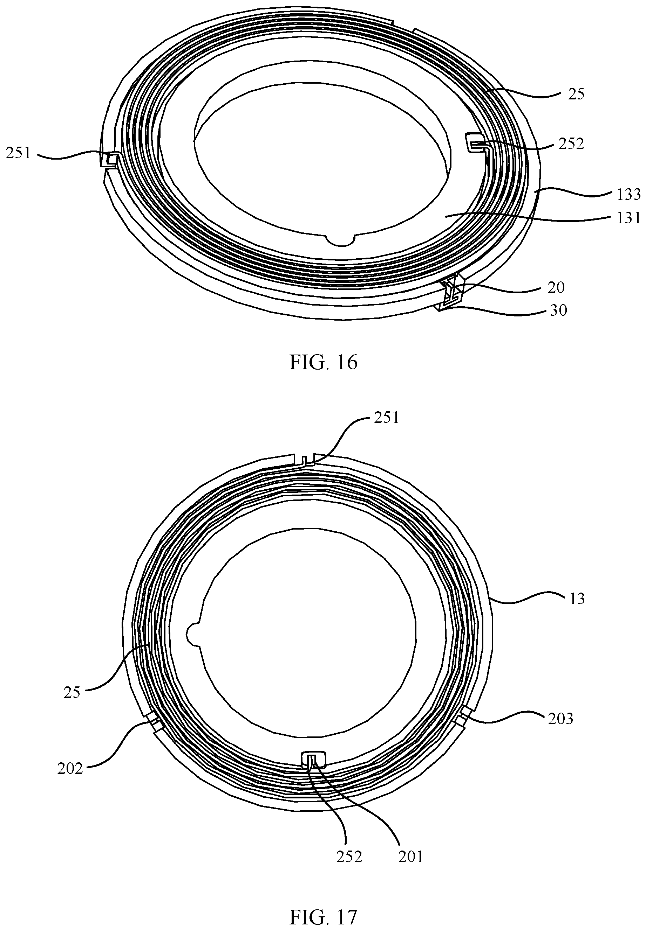

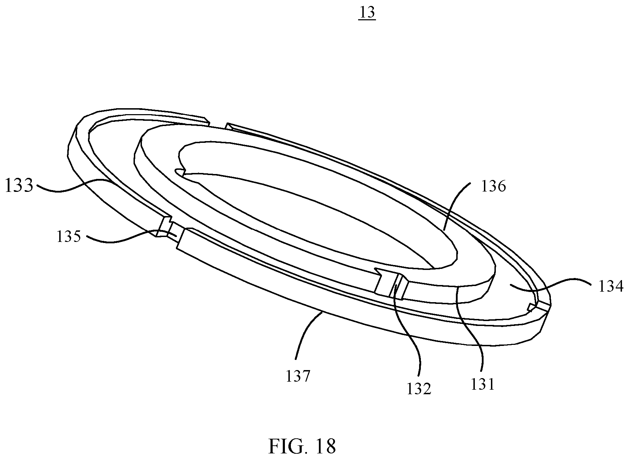

In FIG. 16 to FIG. 18, the iron core body 1 includes a third iron core unit 13. The third iron core unit 13 is disposed below the first iron core unit 11. The first phase wire 3, the second phase wire 4, and the third phase wire 5 are connected in the third iron core unit 13. Specifically, the third iron core unit 13 includes a fifth end face and a sixth end face that are disposed opposite to each other. The fifth end face is disposed at the third iron core unit 13 and faces the first iron core unit 11. The fifth end face is provided with a fourth winding portion 131. The coil 2 includes a fourth coil 25. The fourth coil 25 is disposed at the fourth winding portion 131. With arrangement of the fourth winding portion 131, on the one hand, support can be provided for winding of the fourth coil 25, preventing the fourth coil 25 from loosening or deforming due to vibration of the motor 1000 or an external force. On the other hand, the fourth winding portion 131 can efficiently concentrate and transmit a first magnetic field generated by the fourth coil 25, thereby increasing output power of the motor 1000.

In a possible implementation of this application, the fourth coil 25 is provided with a second upper outer wire end 251. The second upper outer wire end 251 is connected to the adjacent and in-phase outer wire end 21 through the first connector 6, and is connected to the first phase wire 3, the second phase wire 4, and the third phase wire 5 through the outer wire end 21.

In a possible implementation of this application, the fifth end face of the third iron core unit 13 is provided with a fourth annular baffle 133. The fourth annular baffle 133 and the fourth winding portion 131 together define a fourth winding groove 134. The fourth coil 25 is disposed in the fourth winding groove 134. The fourth annular baffle 133 and the fourth winding portion 131 cooperate with each other to fix the fourth coil 25 in the fourth winding groove 134, thereby improving fixing stability of the fourth coil 25.

In a possible implementation of this application, the fourth annular baffle 133 is provided with a fourth positioning groove 135, and the first connector 6 is clamped into the fourth positioning groove 135. With arrangement of the fourth positioning groove 135, on the one hand, support can be provided for connections of the fourth connector 9 with the first upper outer wire end 221 and the second upper outer wire end 251, thereby improving connection efficiency of the first connector 6 with the first upper outer wire end 221 and the second upper outer wire end 251. On the other hand, the fourth positioning groove 135 can prevent the first connector 6 from protruding out of the iron core body 1, thereby reducing the possibility that the first connector 6 collides with other parts, and prolonging a service life of the stator 100.

The stator 100 further includes a conductive member 20. The first phase wire 3, the second phase wire 4, and the third phase wire 5 are connected to the conductive member 20 through the coil 2, and are further electrically connected to each other through the conductive member 20. The conductive member 20 is configured to lead an inner wire of the coil 2 to an outer circumferential side of the iron core body 1, and connect to the first phase wire 3, the second phase wire 4, and the third phase wire 5 on the outer circumferential side of the iron core body 1. In this way, a structure of the stator 100 is optimized, wire connection difficulty of the stator 100 is reduced, damage to the coil 2 is reduced, and a product yield is improved.

Because an internal axial space of the iron core body 1 is small, in a possible implementation of this application, the conductive member 20 and the coil 2 are connected in a radial direction of the iron core body 1. In this way, a structure of the stator 100 is optimized, wire connection difficulty of the stator 100 is reduced, and assembly efficiency of the stator 100 is improved.

In a possible implementation of this application, the iron core body 1 is provided with a third wire hole 132. The conductive member 20 is disposed below the iron core body 1. The conductive member 20 passes through the third wire hole 132 and is radially connected to the coil 2. In this way, the impact of the conductive member 20 on arrangement of the coil 2 is reduced, a spatial structure of the conductive member 20 on the iron core body 1 is optimized, space utilization of the conductive member 20 on the iron core body 1 is improved, and a volume of the stator 100 is reduced.

In a possible implementation of this application, the fourth coil 25 includes a second upper outer wire end 251 and a second upper inner wire end 252. The second upper outer wire end 251 is disposed close to an outer circumferential side of the third iron core unit 13. The second upper inner wire end 252 is disposed close to an inner circumferential side of the third iron core unit 13. The conductive member 20 includes a first connecting portion 201, a second connecting portion 202, and a third connecting portion 203 that are connected to each other. The first connecting portion 201 is disposed close to the inner circumferential side of the iron core body 1. The second connecting portion 202 and the third connecting portion 203 are disposed close to the outer circumferential side of the iron core body 1. The third iron core unit 13 is provided with a third wire hole 132 that penetrates the fifth end face and the sixth end face. The first connecting portion 201 is connected to the fourth coil 25 through the third wire hole 132. Refer to FIG. 7. In the first phase wire 3, a current from the first phase wire 3 flows through the third connector 8, the first upper outer wire end 221a and the first upper inner wire end 222a of the first coil 22a, a second connector 7a, the first lower inner wire end 232a and the first lower outer wire end 231a of the second coil 23a, a first connector 6a, the first upper outer wire end 221b and the first upper inner wire end 222b of the first coil 22b, a second connector 7b, the first lower inner wire end 232b and the first lower outer wire end 231b of the second coil 23b, a first connector 6b, the first upper outer wire end 221c and the first upper inner wire end 222c of the first coil 22c, a second connector 7c, the first lower inner wire end 232c and the first lower outer wire end 231c of the second coil 23c, a first connector 6c, the first upper outer wire end 221d and the first upper inner wire end 222d of the first coil 22d, a second connector 7d, the first lower inner wire end 232d and the first lower outer wire end 231d of the second coil 23d, a first connector 6d, and the second connecting portion 202, and is connected to other phase wires through the second connecting portion 202. Refer to FIG. 8. In the second phase wire 4, a current from the second phase wire 4 flows through the fourth connector 9, the first upper outer wire end 221e and the first upper inner wire end 222e of the first coil 22e, a second connector 7e, the first lower inner wire end 232e and the first lower outer wire end 231e of the second coil 23e,a first connector 6e, the first upper outer wire end 221f and the first upper inner wire end 222f of the first coil 22f, a second connector 7f, the first lower inner wire end 232f and the first lower outer wire end 231f of the second coil 23f, a first connector 6f, the first upper outer wire end 221g and the first upper inner wire end 222g of the first coil 22g, a second connector 7g, the first lower inner wire end 232g and the first lower outer wire end 231g of the second coil 23g, a first connector 6g, the first upper outer wire end 221h and the first upper inner wire end 222h of the first coil 22h, a second connector 7h, the first lower inner wire end 232h and the first lower outer wire end 231h of the second coil 23h, a first connector 6h, and the third connecting portion 203, and is connected to other phase wires through the third connecting portion 203. Refer to FIG. 9. In the third phase wire 5, a current from the third phase wire 5 flows through the fifth connector 10, the second upper inner wire end 252 and the second upper outer wire end 251 of the fourth coil 25, a first connector 6i, the first upper outer wire end 221i and the first upper inner wire end 222i of the first coil 22i, a second connector 7i, the first lower inner wire end 232i and the first lower outer wire end 231i of the second coil 23i, a first connector 6j, the first upper outer wire end 221j and the first upper inner wire end 222j of the first coil 22j, a second connector 7j, the first lower inner wire end 232j and the first lower outer wire end 231j of the second coil 23j, a first connector 6k, the first upper outer wire end 221k and the first upper inner wire end 222k of the first coil 22k, a second connector 7k, the first lower inner wire end 232k and the first lower outer wire end 231k of the second coil 23k, a first connector 6l, the second upper outer wire end 251, the second upper inner wire end 252, and the first connecting portion 201, and is connected to other phase wires through the first connecting portion 201.

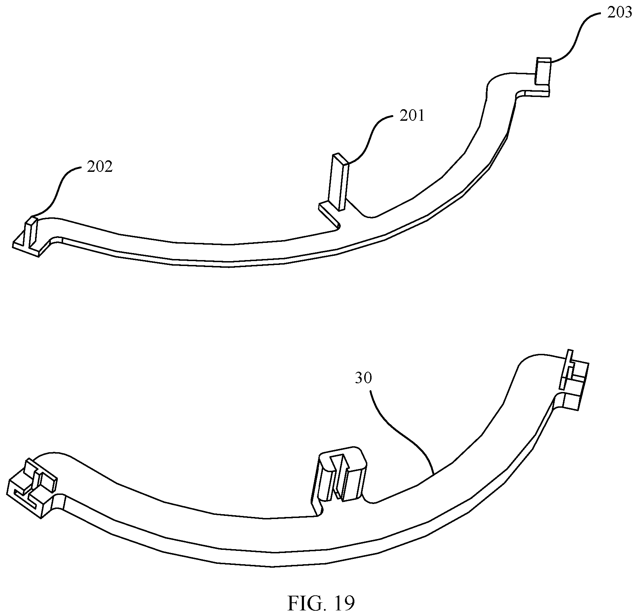

Refer to FIG. 19. In a possible implementation of this application, a sixth insulating sleeve 30 is further sleeved on the conductive member 20. The sixth insulating sleeve 30 is configured to prevent a short circuit caused by direct contact between the conductive member 20 and the iron core body 1. In addition, with arrangement of the sixth insulating sleeve 30, the conductive member 20 can be directly assembled on the iron core body 1, thereby eliminating subsequent insulation processing and improving assembly efficiency of the motor 1000.

Refer to FIG. 20. The stator 100 further includes a center rod 40. The iron core body 1 is sleeved on the center rod 40. The center rod 40 is configured to provide support for fixation of the iron core body 1, thereby improving connection stability of the iron core body 1. In a possible implementation of this application, the center rod 40 is hollow, a rod wall of the center rod 40 is provided with a first through hole 401. The first through hole 401 may be a single waist hole, or may be a plurality of small holes spaced apart, and this application is not limited thereto. One end of each of the first phase wire 3, the second phase wire 4, and the third phase wire 5 is connected to the coil 2, and the other end extends into the center rod 40 through the first through hole 401, and is routed in the center rod 40. In this way, tidiness of external wires of the stator 100 are ensured. In addition, a risk of mechanical damage or chemical corrosion of the first phase wire 3, the second phase wire 4, and the third phase wire 5 is reduced, and a service life of each of the first phase wire 3, the second phase wire 4, and the third phase wire 5 is prolonged.

In a possible implementation of this application, one end of the center rod 40 is provided with an opening 402. After being introduced into the center rod 40 from the first through hole 401, the first phase wire 3, the second phase wire 4, and the third phase wire 5 pass out of the center rod 40 from the opening 402, to connect to an external power supply. The stator 100 further includes a sealing cover 50. The sealing cover 50 covers the opening 402 to seal the interior of the center rod 40, so as to prevent external moisture or dust from entering the center rod 40 and affecting the first phase wire 3, the second phase wire 4, and the third phase wire 5 in the center rod 40. The sealing cover 50 is provided with a second through hole 501. The second through hole 501 may be a single waist hole, or may be a plurality of small holes spaced apart, and this application is not limited thereto. The first phase wire 3, the second phase wire 4, and the third phase wire 5 pass out of the center rod 40 through the second through hole 501. When the first phase wire 3, the second phase wire 4, the third phase wire 5, the center rod 40, and the sealing cover 50 perform apparatus, the first phase wire 3, the second phase wire 4, and the third phase wire 5 can be first introduced into the center rod 40 from the first through hole 401. Then, the first phase wire 3, the second phase wire 4, and the third phase wire 5 pass out of the center rod 40 through the opening 402, and pass through the second through hole 501 outside the center rod 40. Finally, the sealing cover 50 covers the opening 402, thereby sealing the center rod 40.

Refer to FIG. 2. The rotor 200 includes a housing 210 and a permanent magnet 220. The housing 210 is provided with a mounting cavity 211, and the permanent magnet 220 is mounted on a cavity wall of the mounting cavity 211. The housing 210 is provided with a mounting portion 212, and the center rod 40 is disposed on the mounting portion 212. The permanent magnet 220 is configured to generate a second magnetic field that can mutually interact with the first magnetic field, and the permanent magnet 220 can push the housing 210 to move under the action of the first magnetic field and the second magnetic field. In a possible implementation of this application, the stator 100 further includes a bearing 60. The center rod 40 is mounted on the mounting portion 212 through the bearing 60. The bearing 60 is configured to provide support for movements of the center rod 40 and the mounting portion 212, ensuring stability of movements of the center rod 40 and the mounting portion 212.

It should be noted that in other possible implementations of this application, the vehicle may also directly include the foregoing motor, and this application is not limited thereto.

In the description of the embodiments of this application, it should be noted that the directional or positional relationships indicated by the terms "center", "upper", "lower", "left", "right", "vertical", "horizontal", "inner", "outer", and the like are based on the directional or positional relationships shown in the drawings, which is only for the purpose of facilitating the description of this application and simplifying the description, and is not intended to indicate or imply that the apparatuses or elements referred to must have specific directions, and be constructed and operated in specific directions. Therefore, these terms should not be construed as limiting this application.

The foregoing disclosure is merely a preferred embodiment of this application, and should not be construed as limiting the scope of the claims of this application. A person of ordinary skill in the art may understand that implementing all or part of the processes of the foregoing embodiment and making equivalent changes according to the claims of this application still fall within the scope of this application.

## Claims

1. A stator (100), comprising a first phase wire (3), a second phase wire (4), a third phase wire (5), an iron core body (1), and a coil (2) wound around the iron core body (1), the coil (2) comprising a plurality of outer wire ends (21), the plurality of outer wire ends (21) being spaced apart in an axial direction of the iron core body (1), the outer wire ends (21) being disposed on an outer circumferential side of the iron core body (1), and the adjacent and in-phase outer wire ends (21) are connected to each other.

2. The stator (100) according to claim 1, wherein the stator (100) comprises a first connector (6), and two ends of the first connector (6) are respectively connected to the adjacent and in-phase outer wire ends (21).

3. The stator (100) according to claim 2, wherein the first connector (6) comprises a first wire (61) and a first insulating sleeve (62), and the first insulating sleeve (62) is sleeved on the first wire (61); and
two ends of the first insulating sleeve (62) are respectively provided with a first clamping portion (621) and a second clamping portion (622), and the first wire (61) extends into the first clamping portion (621) and the second clamping portion (622), to connect to the outer wire ends (21).

4. The stator (100) according to claim 2, wherein the iron core body (1) comprises a plurality of first iron core units (11), and the plurality of first iron core units (11) are spaced apart in an axial direction of the iron core body (1).

5. The stator (100) according to claim 4, wherein the first iron core unit (11) comprises a first end face (120) and a second end face (128) that are disposed opposite to each other, the first end face (120) is provided with a first winding portion (111), and the second end face (128) is provided with a second winding portion (112); and
the coil (2) comprises a first coil (22, 22a-22k) and a second coil (23, 23a-23k), the first coil (22, 22a-22k) is disposed at the first winding portion (111), and the second coil (23, 23a-23k) is disposed at the second winding portion (112).

6. The stator (100) according to claim 5, wherein the outer wire end (21) comprises a first upper outer wire end (221) and a first lower outer wire end (231), at least part of the first coil (22, 22a-22k) is provided with the first upper outer wire end (221), and at least part of the second coil (23, 23a-23k) is provided with the first lower outer wire end (231); and
between the adjacent and in-phase first iron core units (11), the first upper outer wire end (221) and the first lower outer wire end (231) are connected through a first connector (6).

7. The stator (100) according to claim 5, wherein the first coil (22, 22a-22k) is provided with a first upper inner wire end (222), the second coil (23, 23a-23k) is provided with a first lower inner wire end (232), the first upper inner wire end (222) and the first lower inner wire end (232) are disposed close to an inner circumferential side of the first iron core unit (11); and
in each first iron core unit (11), the first upper inner wire end (222) and the first lower inner wire end (232) are connected through a second connector (7).

8. The stator (100) according to claim 7, wherein the second connector (7) comprises a second wire (71) and a second insulating sleeve (72), and the second insulating sleeve (72) is sleeved on the second wire (71); and
two ends of the second insulating sleeve (72) are respectively provided with a third clamping portion (721) and a fourth clamping portion (722), one end of the second wire (71) extends into the third clamping portion (721) to connect to the first upper inner wire end (222), and the other end of the second wire (71) extends into the fourth clamping portion (722) to connect to the first lower inner wire end (232).

9. The stator (100) according to claim 5, wherein the outer wire end (21) comprises a plurality of first upper outer wire ends (221a-221k), and the first upper outer wire ends (221a-221k) are disposed on the first coil (22, 22a-22k);
at least one of the first upper outer wire ends (221a-221k) is connected to the first phase wire (3) through a third connector (8);
at least one of the first upper outer wire ends (221a-221k) is connected to the second phase wire (4) through a fourth connector (9); and
at least one of the first upper outer wire ends (221a-221k) is connected to the third phase wire (5).

10. The stator (100) according to claim 9, wherein the third connector (8) comprises a third wire (81) and a third insulating sleeve (82), and the third insulating sleeve (82) is sleeved on the third wire (81); and
the third insulating sleeve (82) comprises a fifth clamping portion (821), one end of the third wire (81) is connected to the first phase wire (3), and one end of the same extends into the fifth clamping portion (821) to connect to the first upper outer wire end (221a-221k).

11. The stator (100) according to claim 9, wherein the fourth connector (9) comprises a fourth wire (91) and a fourth insulating sleeve (92), and the fourth insulating sleeve (92) is sleeved on the fourth wire (91); and
the fourth insulating sleeve (92) comprises a sixth clamping portion (921), one end of the fourth wire (91) is connected to the second phase wire (4), and one end of the same extends into the sixth clamping portion (921) to connect to the first upper outer wire end (221a-221k).

12. The stator (100) according to claim 4, wherein the iron core body (1) comprises a second iron core unit (12), and the second iron core unit (12) is disposed on the first iron core unit (11).

13. The stator (100) according to claim 12, wherein the second iron core unit (12) comprises a third end face (126) and a fourth end face (127) that are disposed opposite to each other, the fourth end face (127) is disposed facing the first iron core unit (11), and the fourth end face (127) is provided with a third winding portion (121); and
the coil (2) comprises a third coil (24), and the third coil (24) is disposed at the third winding portion (121).

14. The stator (100) according to claim 13, wherein the third coil (24) is provided with a second lower outer wire end (241), and the second lower outer wire end (241) is disposed close to an outer circumferential side of the second iron core unit (12), and the second lower outer wire end (241) is connected to the adjacent and in-phase outer wire end (21) through a first connector (6a-6l).

15. The stator (100) according to claim 13, wherein the third coil (24) is provided with a second lower inner wire end (242), and the second lower inner wire end (242) is disposed close to an inner circumferential side of the second iron core unit (12), and the second lower inner wire end (242) is connected to the third phase wire (5) through a fifth connector (10).

16. The stator (100) according to claim 15, wherein the fifth connector (10) comprises a fifth wire (101) and a fifth insulating sleeve (102), and the fifth insulating sleeve (102) is sleeved on the fifth wire (101); and
the fifth insulating sleeve (102) comprises a seventh clamping portion (1021), one end of the fifth wire (101) is connected to the third phase wire (5), and one end of the same extends into the seventh clamping portion (1021) to connect to the second lower inner wire end (242).

17. The stator (100) according to claim 4, wherein the iron core body (1) comprises a third iron core unit (13), and the third iron core unit (13) is disposed below the first iron core unit (11).

18. The stator (100) according to claim 17, wherein the third iron core unit (13) comprises a fifth end face (136) and a sixth end face (137) that are disposed opposite to each other, the fifth end face (136) is disposed at the third iron core unit (13) and faces the first iron core unit (11), and the fifth end face (136) is provided with a fourth winding portion (131); and
the coil (2) comprises a fourth coil (25), and the fourth coil (25) is disposed at the fourth winding portion (131).

19. The stator (100) according to claim 18, wherein the fourth coil (25) is provided with a second upper outer wire end (251), and the second upper outer wire end (251) is connected to the adjacent and in-phase outer wire end (21) through the first connector (6a-6l).

20. The stator (100) according to any one of claims 1 to 19, wherein the stator (100) further comprises a conductive member (20), and the conductive member (20) is separately electrically connected to the first phase wire (3), the second phase wire (4), and the third phase wire (5).

21. The stator (100) according to claim 20, wherein the conductive member (20) is disposed below the iron core body (1).

22. The stator (100) according to claim 20, wherein the conductive member (20) is connected to the coil (2) in a radial direction of the iron core body (1).

23. The stator (100) according to claim 20, wherein the conductive member (20) comprises a first connecting portion (201), a second connecting portion (202), and a third connecting portion (203) that are connected to each other; and
the first connecting portion (201) is disposed close to an inner circumferential side of the iron core body (1), and the second connecting portion (202) and the third connecting portion (203) are disposed close to an outer circumferential side of the iron core body (1).

24. The stator (100) according to claim 23, wherein the iron core body (1) comprises a third iron core unit (13), the coil (2) comprises a fourth coil (25), the fourth coil (25) is disposed at the third iron core unit (13), the fourth coil (25) comprises a second upper outer wire end (251) and a second upper inner wire end (252), the second upper outer wire end (251) is disposed close to an outer circumferential side of the third iron core unit (13), and the second upper inner wire end (252) is disposed close to an inner circumferential side of the third iron core unit (13);
the second upper outer wire end (251) is connected to the third phase wire (5), and the second upper inner wire end (252) is connected to the first connecting portion (201);
the first phase wire (3) is connected to the second connecting portion (202); and
the second phase wire (4) is connected to the third connecting portion (203).

25. The stator (100) according to claim 24, wherein the third iron core unit (13) comprises a fifth end face (136) and a sixth end face (137) that are disposed opposite to each other; and
the fourth coil (25) is disposed on the fifth end face (136), and the conductive member (20) is disposed on the sixth end face (137).

26. The stator (100) according to claim 1, wherein the stator (100) further comprises a center rod (40), and the iron core body (1) is sleeved on the center rod (40).

27. The stator (100) according to claim 26, wherein the center rod (40) is hollow, and a rod wall of the center rod (40) is provided with a first through hole (401); and
one end of each of the first phase wire (3), the second phase wire (4), and the third phase wire (5) is connected to the coil (2), and the other end passes through the first through hole (401) and extends into the center rod (40).

28. The stator (100) according to claim 27, wherein one end of the center rod (40) is provided with an opening (402); and
the stator (100) further comprises a sealing cover (50), the sealing cover (50) covers the opening 402, the sealing cover (50) is provided with a second through hole (501), and the first phase wire (3), the second phase wire (4), and the third phase wire (5) pass out of the center rod (40) through the second through hole (501).

29. The stator (100) according to claim 26, wherein the stator (100) further comprises a bearing (60), and the bearing (60) is configured to connect the center rod (40) to a rotor (200) of a motor (1000).

30. A motor (1000), comprising:
the stator (100) according to any one of claims 1 to 29; and
a rotor (200), the rotor (200) being movable relative to an axial direction of the stator (100).

31. A shock absorber (2000), comprising the motor (1000) according to claim 30.

32. A suspension system (3000), comprising the shock absorber (2000) according to claim 31.

33. A vehicle (4000), comprising the motor (1000) according to claim 30, or the suspension system (3000) according to claim 32.
